# EUROPÄISCHE PATENTSCHRIFT

(11) **EP 1 323 758 B1**
(45) Veröffentlichungstag und Bekanntmachung des Hinweises auf die Patenterteilung: **12.04.2006**
(21) Anmeldenummer: 02024733.4
(22) Anmeldetag: 06.11.2002
(51) Int. Cl.: C08G 18/42, C09D 175/16, C09D 5/03

(54) **Strahlen härtbare Pulverlackzusammensetzungen und deren Verwendung**
Radiation curable powder lacquer compositions and their use
Compositions de revêtement en poudre durcissable par rayonnement et leur utilisation

(30) Priorität: 22.12.2001 DE 10163827
(43) Veröffentlichungstag der Anmeldung: 02.07.2003
(73) Patentinhaber: Degussa AG, 40474 Düsseldorf (DE)
(72) Erfinder: Spyrou, Emmanouil, 45772 Marl (DE); Wenning, Andreas, Dr., 48301 Nottuln (DE); Franzmann, Giselher, Dr., 58453 Witten (DE)

(56) Entgegenhaltungen:
- EP-A- 0 408 465
- EP-A- 1 129 788
- EP-A- 1 209 182
- WO-A-02/50147
- WO-A-98/55554

## Beschreibung

Die Erfindung betrifft Strahlen härtbare Pulverlackzusammensetzungen, die zu licht- und wetterstabilen Lackfilmen vernetzen.

Thermisch vernetzbare Pulverlacke sind bekannt und werden in der lackverarbeitenden Industrie häufig verwendet.

So beschreibt z. B. die DE-PS 27 35 497 PUR-Pulverlacke mit hervorragender Witterungs- und Wärmestabilität. Die Vernetzer, deren Herstellung in der DE-PS 27 12 931 beschrieben wird, bestehen aus ε-Caprolactam blockiertem Isocyanuratgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und/oder Wiedergewinnung des Blockierungsmittels getroffen werden. Zudem weisen die Vernetzer eine geringe Reaktivität auf. Es sind Härtungstemperaturen oberhalb von 170 °C erforderlich.

Beide Nachteile, Emission von Blockierungsmittel und Aushärtung bei hohen Temperaturen, können ausgeräumt werden durch Pulverlacke, die nicht thermisch, sondern durch Strahlung ausgehärtet werden. Derartige Strahlen härtbare Pulverlacke sind bekannt und z. B. in USP 3,485,732, EP 0407826, EP 0636669, WO99/14254, USP 3,974,303, USP 5,639,560 und EP 0934359 beschrieben.

Die EP 0636669 und die WO 99/14254 beschreiben zweikomponentige, Strahlen härtbare Pulverlacke auf Basis eines ungesättigten Polyesters und eines Vinylethers. Die daraus hergestellten Beschichtungen sind nicht für den Außeneinsatz geeignet, da sie stark vergilben.

Das US-Patent 3,974,303 beschreibt thermoplastische Harze, die pro 1000 g des Molekulargewichtes 0,5 bis 3,5 polymerisierbare ungesättigte Gruppen enthalten. Die beschriebenen Polyurethane (s. Beispiel 1) sind jedoch nicht wetterstabil und besitzen aufgrund fehlender Polyestergruppen und geringer Kettenlänge eine geringe Flexibilität. Das US-Patent 5,639,560 beschreibt Strahlen härtbare Pulverzusammensetzungen mit speziellen kristallinen Polyestern, die außerdem Methacrylendgruppen aufweisen, als Bindemittel. Fakultativ enthalten diese Pulverzusammensetzungen ethylenisch ungesättigte Oligomere, u.a. Urethanacrylate, in untergeordneten Mengen, bevorzugt bis zu 10 Gewichtsprozent. Die in diesem Patent vorgestellten Strahlen härtbaren Pulverlackformulierungen haben aber wesentliche Nachteile. Sie sind nur bei minus 80 °C mahlbar und in der Regel sind die daraus resultierenden Beschichtungen entweder nicht außenwetterstabil oder nicht flexibel. Besonders gravierend ist der Nachteil einer sehr geringen Pendelhärte (nach König) von unter 120s.

Die EP 0934359 beschreibt pulverförmige Strahlen härtbare Mischungen aus amorphen und kristallinen Polyestern mit terminalen Methacrylatgruppen. Diese daraus hergestellten Pulverlackbeschichtungen besitzen zwar eine höhere Glasübergangstemperatur als die kristallinen Methacrylate der US 5,639,560. Sie müssen jedoch weiterhin unter Kühlung gemahlen werden. Zudem sind Härte und Haftung der Beschichtungen nur befriedigend.

Aufgabe der vorliegenden Erfindung war es, Strahlen härtbare Pulverlackzusammensetzungen zu finden, die lagerstabil bei 35 °C sind und außerdem nach der Aushärtung der Lackfilme zu gleichzeitig harten wie flexiblen und außenwetterstabilen Beschichtungen führen. Diese Beschichtungen sollen hochtransparent wie auch trüb eingestellt werden können. Außerdem sollen die Pulverlacke mit wenig oder ohne Kühlmittel mahlbar sein.

Überraschend konnte diese Aufgabe durch eine Strahlen härtbare Pulverlackzusammensetzung gelöst werden, die als Bindemittel eine Mischung aus mindestens einem amorphen Urethanacrylat und mindestens einem kristallinen Urethanacrylat, mit einem Glasübergangspunkt (Tg) der Mischung von mindestens 35 °C, enthält.

Gegenstand der Erfindung sind Strahlen härtbare Pulverlackzusammensetzung enthaltend
I. ein Bindemittel bestehend aus
   A) 60 - 90 Gew.-% mindestens eines amorphen Urethanacrylats und
   B) 10 - 40 Gew.-% mindestens eines kristallinen Urethanacrylats,
   wobei der Tg der Mischung aus A und B mindestens 35 °C beträgt; und
II. Hilfs- und Zusatzstoffe,
   wobei UV-Initiatoren in der Pulverlackzusammensetzung ausgeschlossen sind.

Weiterer Gegenstand der Erfindung ist die Verwendung von Zusammensetzungen enthaltend
I. ein Bindemittel bestehend aus
   A) 60 - 90 Gew.-% mindestens eines amorphen Urethanacrylats und
   B) 10 - 40 Gew.-% mindestens eines kristallinen Urethanacrylats, wobei der Tg der Mischung aus A und B mindestens 35 °C beträgt; und
II. Hilfs- und Zusatzstoffe, wobei UV-Initiatoren ausgeschlossen sind, zur Herstellung von Strahlen härtbaren Pulverlackzusammensetzungen.

Ebenfalls Gegenstand der Erfindung ist ein Verfahren zur Herstellung von Strahlen härtbaren Pulverlackzusammensetzungen
enthaltend
I. ein Bindemittel bestehend aus
   C) 60 - 90 Gew.-% mindestens eines amorphen Urethanacrylats und
   D) 10 - 40 Gew.-% mindestens eines kristallinen Urethanacrylats,
   wobei der Tg der Mischung aus A und B mindestens 35 °C beträgt; und
II. Hilfs- und Zusatzstoffe,
   wobei UV-Initiatoren in der Pulverlackzusammensetzung ausgeschlossen sind, bei Einhaltung einer Temperaturobergrenze zwischen 120 °C und 130 °C, in beheizbaren Knetern, insbesondere Extrudern (Richtig?).

Gegenstand der Erfindung ist auch ein Verfahren zur Herstellung von Beschichtungen mit hoher oder niedriger Transparenz durch Verwendung von Strahlen härtbaren Pulverlackzusammensetzungen
enthaltend
I. ein Bindemittel bestehend aus
   A) 60 - 90 Gew.-% mindestens eines amorphen Urethanacrylats und
   B) 10 - 40 Gew.% mindestens eines kristallinen Urethanacrylats,
   wobei der Tg der Mischung aus A und B mindestens 35 °C beträgt; und
II. Hilfs- und Zusatzstoffe,
   wobei UV-initiatoren in der Pulverlackzusammensetzung ausgeschlossen sind.

Urethanacrylate im Sinne dieser Erfindung bestehen aus einem hydroxylgruppenhaltigen Polyester, an den durch Umsetzung mit Polyisocyanaten und acrylathaltigen Alkoholen Urethangruppen und Acrylatgruppen angebunden werden.
A. Die erfindungsgemäßen amorphen Urethanacrylate werden aus amorphen hydroxylgruppenhaltigen Polyestern (A1) mit einem Tg von 35 - 80 °C durch Umsetzung mit Polyisocyanaten (A2) und einer Verbindung, die gleichzeitig mindestens eine Alkoholgruppe und mindestens eine polymerisationsfähige Acrylatgruppe (A3) enthält, hergestellt. Sie weisen ebenso Urethangruppen wie endständige Acrylatgruppen auf.
A1. Amorphe hydroxylgruppenhaltigen Polyester mit einem Tg von 35 - 80 °C werden hergestellt durch Polykondensation von geeigneten Dicarbonsäuren und Diolen. Die Kondensation erfolgt auf an sich bekannte Weise in einer Inertgas-Atmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist. Die für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutarsäure, 1,4-Cyclohexandicarbonsäure bzw. - soweit zugänglich - deren Anhydride oder Ester. Besonders gut geeignet sind Isophthalsäure, Terephthalsäure, Hexahydroterephthalsäure und 1,4-Cyclohexandicarbonsäure.
   Als Polyole kommen z. B. Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methylpropandiol-1,3, 2-Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, infrage. Bevorzugt sind Monoethylenglykol, Neopentylglykol, Dicidol, Cyclohexandimethanol, Trimethylolpropan und Glycerin.
   So hergestellte amorphe Polyester haben eine OH-Zahl von 15 - 150 mg KOH/g, einen Tg von 35 - 80 °C und eine Säurezahl von < 5 mg KOH/g. Es können auch Gemische von amorphen Polyestern eingesetzt werden.
A2. In den erfindungsgemäßen amorphen Urethanacrylaten werden als Polyisocyanate Diisocyanate aliphatischer, (cyclo)aliphatischer oder cycloaliphatischen Struktur eingesetzt. Repräsentative Beispiele der Polyisocyanate sind 2-Methylpentamethylen-1,5-diisocyanat, Hexamethylendiisocyanat, Trimethylhexamethylen-1,6-diisocyanat, insbesondere das 2,2,4- und das 2,4,4-Isomere und technische Gemische beider Isomere, 4,4'-Methylen-bis(cyclohexylisocyanat), Norbornandiisocyanat, und 3,3,5-Trimethyl-1-isocyanato-3-isocyanatomethylcyclohexan (IPDI). Ebenfalls gut geeignet sind auch Polyisocyanate, die durch Umsetzung von Polyisocyanaten mit sich selbst über Isocyanatgruppen erhältlich sind, wie Isocyanurate, die durch Reaktion dreier Isocyanatgruppen entstehen. Die Polyisocyanate können ebenfalls Biuret- oder Allophanatgruppen enthalten. Besonders gut geeignet ist IPDI.
A3. Als polymerisationsfähige Verbindungen mit mindestens einer freien OH-Gruppe und einer polymerisationsfähigen Acrylatgruppe kommen z. B. Hydroxyethylacrylat (HEA), Hydroxypropylacrylat und Glycerindiacrylat in Frage. Besonders gut geeignet ist Hydroxyethylacrylat (HEA).
   Zur Herstellung des amorphen Urethanacrylats A aus den amorphen OH-haltigen Polyestern (A1), Polyisocyanaten A2 und A3 wird zunächst das Polyisocyanat vorgelegt, mit DBTL als Katalysator und IONOL CP (Shell) als Polymerisationsinhibitor versetzt und in einem Verhältnis NCO:OH von 2,5 - 1,5 : 1 der Polyester zugegeben. Nach beendeter Zugabe wird die Reaktion bei 100 - 140 °C vervollständigt. Danach wird zum Reaktionsprodukt die Komponente A3, z. B. Hydroxyethylacrylat im Verhältnis Rest-NCO:OH von 1,0 - 1,1 : 1 gegeben und die Reaktion bei 80 - 140 °C vervollständigt, so dass ein NCO-Gehalt unter 0,1 % erreicht wird. Auch möglich ist eine Vorreaktion eines Polyisocyanats, z. B. IPDI, mit der Komponente A3 und die Zugabe dieses NCO-haltigen Vorproduktes zum hydroxylgruppenhaltigen Polyester.
B. Die erfindungsgemäßen kristallinen Urethanacrylate werden durch Umsetzung von kristallinen hydroxylgruppenhaltigen Polyestern (B1) mit Polyisocyanaten (B2) und einer Komponente A3 hergestellt. Besonders gut geeignet als A3 ist Hydroxyethylacrylat (HEA). Sie weisen ebenso Urethangruppen wie endständige Acrylatgruppen auf.
B1. Kristalline hydroxylgruppenhaltigen Polyester werden hergestellt durch Polykondensation wie schon unter A1 für amorphe Polyester beschrieben. Dazu wird eine Säurekomponente, bestehend aus 80 - 100 Molprozent einer gesättigten linearen aliphatischen oder cycloaliphatischen Dicarbonsäure mit 4 - 14 Kohlenstoffatomen und 0 - 20 Molprozent einer anderen aliphatischen oder cycloaliphatischen oder aromatischen Di- oder Polycarbonsäure, mit einer Alkoholkomponente, bestehend aus 80 - 100 Molprozent eines linearen aliphatischen Diols mit 2 - 15 Kohlenstoffatomen und 0 - 20 % eines anderen aliphatischen oder cycloaliphatischen Di- oder Polyols mit 2 - 15 Kohlenstoffatomen, umgesetzt. Die so hergestellten kristallinen hydroxylgruppenhaltigen Polyester haben eine OH-Zahl von 15 - 150 mg KOH/g, eine Säurezahl < 5 mg KOH/g und einen Schmelzpunkt von 40 -130 °C.
   Für die Herstellung von kristallinen Polyestern bevorzugte Carbonsäuren sind Bernstein-, Adipin-, Kork-, Azelain-, Sebacin-, Dodecandi-, Tetrahydrophthal-, Hexahydrophthal-, Hexahydroterephthal-, Endomethylentetrahydrophthal-, Isophthalsäure, Terephthalsäure, 1,4-Cyclohexandicarbonsäure und Glutarsäure bzw. - soweit zugänglich - deren Anhydride oder Ester. Besonders gut geeignet sind Bernsteinsäure, Adipinsäure, Sebacinsäure und Dodecandisäure.
   Als Polyole sind die folgenden Diole Ethylenglykol, Propandiol-(1,2) und -(1,3), 2,2-Dimethylpropandiol-(1,3), Butandiol-(1,4), Pentandiol-(1,5), Hexandiol-(1,6), 2-Methylpentandiol-(1,5), 2,2,4-Trimethylhexandiol-(1,6), 2,4,4-Trimethylhexandiol-(1,6), Heptandiol-(1,7), Decandiol-(1,10), Dodecandiol-(1,12), Octadecen-9,10-diol-(1,12), Octadecandiol-(1,18), 2,4-Dimethyl-2-propylheptandiol-(1,3), Butendiol-(1,4), Butindiol-(1,4), Diethylenglykol, Triethylenglykol, Tetraethylenglykol, trans- und cis-1,4-Cyclohexandimethanol, die Triole Glycerin, Hexantriol-(1,2,6), 1,1,1-Trimethylolpropan und 1,1,1-Trimethylolethan und das Tetraol Pentaerythrit, geeignet.
B2. Bevorzugt werden zur Herstellung der erfindungsgemäßen kristallinen Urethanacrylate als Polyisocyanate Diisocyanate aliphatischer, (cyclo)aliphatischer oder cycloaliphatischen Struktur eingesetzt. Repräsentative Beispiele der Polyisocyanate sind 2-Methylpentamethylen-1,5-diisocyanat, Hexamethylendiisocyanat, Trimethylhexamethylen-1,6-diisocyanat, insbesondere das 2,2,4- und das 2,4,4-Isomere und technische Gemische beider Isomere, 4,4'-Methylen-bis(cyclohexylisocyanat), Norbomandiisocyanat und 3,3,5-Trimethyl-1-isocyanato-3-isocyanatomethylcyclohexan (IPDI). Ebenfalls gut geeignet sind auch Polyisocyanate, die durch Umsetzung von Polyisocyanaten mit sich selbst über Isocyanatgruppen erhältlich sind, wie Isocyanurate, die durch Reaktion dreier Isocyanatgruppen entstehen. Die Polyisocyanate können ebenfalls Biuret- oder Allophanatgruppen enthalten. Besonders gut geeignet ist IPDI.
B3. Die polymerisationsfähigen Verbindungen sind identisch mit der Komponente A3.
   Zur Herstellung der erfindungsgemäßen Urethanacrylate B aus kristallinen OH-haltigen Polyestern (B1), Polyisocyanaten (B2) und B3 wird zunächst das Polyisocyanat vorgelegt, mit DBTL als Katalysator und IONOL CP (Shell) als Polymerisationsinhibitor versetzt und in einem Verhältnis NCO:OH von 2,5 - 1,5 : 1 der Polyester zugegeben. Nach beendeter Zugabe wird die Reaktion bei 70 - 130 °C vervollständigt. Danach wird zum Reaktionsprodukt die Komponente B3, z. B. Hydroxyethylacrylat, im Verhältnis Rest-NCO:OH von 1,0 - 1,1 : 1 gegeben und die Reaktion bei 70 - 130 °C vervollständigt, so dass ein NCO-Gehalt von unter 0,1 % erreicht wird.
   Amorphe und kristalline Urethanacrylate werden in einem Verhältnis von amorph zu kristallin von 60 - 40 bis 90 - 10 Gew.-% gemischt, so dass das Endprodukt einen Tg von mindestens 35 °C aufweist. Es ist auch möglich, die amorphen und kristallinen Ausgangspolyester zu mischen und diese dann in Mischung mit Polyisocyanaten und acrylathaltigen Alkoholen umzusetzen.
   Zur Strahlenhärtung der erfindungsgemäßen Pulverlackzusammensetzung sind beschleunigte Elektronenstrahlen geeignet. Die Elektronenstrahlung generiert aus der Pulverlackzusammensetzung freie Radikale in einer Anzahl, die eine extrem schnelle Polymerisation der reaktiven Acrylatgruppen gewährleistet. Bevorzugt werden Strahlungsdosen von 5 bis 15 Mrad verwendet.
   Der Einsatz von Initiatoren, z. B. Thioxanthone, Phosphinoxide, Metallocene, tertiäre Aminobenzole oder tertiäre Aminobenzophenone, die bei Bestrahlung mit sichtbarem Licht in Radikale zerfallen, ist ebenso möglich.
   Optionale Zusatzstoffe sind acrylat- oder methacrylathaltige Verbindungen, wie z. B. das Triacrylat von Tris(2-hydroxyethyl)isocyanurat (SR 386, Sartomer), und Haftvermittler, die in untergeordneten Anteilen von 0 - 20 Gew.-% eingesetzt werden können, um die Beschichtungseigenschaften zu modifizieren.
   Weitere bei Pulverlacken übliche Zusatzstoffe sind Verlaufmittel, Lichtstabilisatoren, und Entgasungsmittel. Diese können in 0 - 5 Gew.-% verwendet werden. Außerdem möglich ist der Einsatz von Pigmenten und Füllern, z. B. Metalloxide wie Titandioxid, und Metallhydroxide, Sulfate, Sulfide, Carbonate, Silicate, Talkum, Ruß usw. in Gewichtsanteilen von 0 - 30 %.
   Zur Herstellung der gebrauchsfertigen Pulverlackzusammensetzung werden die Einsatzstoffe vermischt. Die Homogenisierung der Einsatzstoffe kann in geeigneten Aggregaten, wie z. B. beheizbaren Knetern, vorzugsweise jedoch durch Extrudieren, erfolgen, wobei Temperaturobergrenzen von 120 - 130 °C nicht überschritten werden sollten. Die extrudierte Masse wird nach Abkühlen auf Raumtemperatur und nach geeigneter Zerkleinerung zum sprühfertigen Pulver ohne Zusatz von Kühlmitteln vermahlen. Das Auftragen des sprühfertigen Pulvers auf geeignete Substrate kann nach den bekannten Verfahren, wie z. B. durch elektro- oder tribostatisches Pulversprühen, Wirbelsintern oder elektrostatisches Wirbelsintern erfolgen. Geeignete Substrate sind z. B. unbehandelte oder vorbehandelte metallische Substrate, Holz, Holzwerkstoffe, Kunststoffe, Glas oder Papier.
   Die aus den erfindungsgemäßen Pulverlackzusammensetzungen hergestellten Beschichtungen können von hochtransparent bis trüb eingestellt werden.
   Gegenstand der Erfindung ist demnach auch die Verwendung der Strahlen härtbaren Pulverlackzusammensetzungen zur Herstellung von Beschichtungen mit hoher oder niedriger Transparenz.
   Die Erfindung wird durch die folgenden Beispiele näher erläutert:

### Beispiele:

### 1. Allgemeine Herstellvorschrift hydroxylgruppenhaltiger Polyester

Säurekomponenten und Alkoholkomponenten werden mit 0,2 Massenprozente n-Butylzinntrioctonoat versetzt und in einer mit einer Destillationskolonne versehenen Apparatur unter Stickstoff und Rühren auf 190 °C erhitzt. Diese Temperatur wird im Laufe der Wasserabscheidung langsam auf 230 °C erhöht. Nachdem etwa 98 % der theoretischen Wassermenge abdestilliert worden sind, wird das Produkt abgekühlt und auf OH-Zahl (OHZ in mg KOH/g) und Säure-Zahl (SZ in mg KOH/g) geprüft.

Auf diese Weise wurden vier Polyester hergestellt:
A1: Amorpher Polyester aus IPS 100 %, MEG 20 % und NPG 80 %, OHZ 42 mg KOH/g, Tg 48 °C
A2: Amorpher Polyester aus IPS 100 %, MEG 20 % und DCD 80 %, OHZ 40 mg KOH/g, Tg 75 °C
B1: Kristalliner Polyester aus DDS 100 %, MEG 100 %, OHZ 31 mg KOH/g, Schmp.: 81 °C
B2: Kristalliner Polyester aus BSA 100 %, BD-1,4 100 %, OHZ 31 mg KOH/g, Schmp.: 113 °C
BSA: Bersteinsäureanhydrid, DDS: Dodecandisäure, IPS: Isophthalsäure, BD-1,4: Butandiol-1,4, MEG: Monoethylenglykol, NPG: Neopentylglykol, DCD: Dicidol

### 2. Herstellung des amorphen Urethanacrylates A1U

111,2 g des Polyesters Al (OHZ 42) werden aufgeschmolzen und bei 120 °C portionsweise unter kräftigen Rühren zu einer Mischung aus 23,7 g IPDI, 0,3 g IONOL CP und 0,3 g DBTL gegeben. Nach 30 min Reaktion werden zusätzlich 14,9 g Hydroxyethylacrylat zugetropft. Nach weiteren 30 min Rühren liegt der NCO-Gehalt unter 0,1 % und die heiße Reaktionsmischung wird aus dem Kolben auf eine Folie gegossen. Sobald die Reaktionsmasse erstarrt und abgekühlt ist, wird sie mechanisch zerkleinert und gemahlen. Der TG dieses Produktes beträgt 41 °C.

### 3. Herstellung des amorphen Urethanacrylates A2U

37,7 g des Polyesters A2 (OHZ 40) werden aufgeschmolzen und bei 140 °C portionsweise unter kräftigen Rühren zu einer Mischung aus 7,5 g IPDI, 0,1 g IONOL CP und 0,1 g DBTL gegeben. Nach 30 min Reaktion werden zusätzlich 4,7 g Hydroxyethylacrylat zugetropft. Nach weiteren 30 min Rühren liegt der NCO-Gehalt unter 0,1 % und die heiße Reaktionsmischung wird aus dem Kolben auf eine Folie gegossen. Sobald die Reaktionsmasse erstarrt und abgekühlt ist, wird sie mechanisch zerkleinert und gemahlen. Der TG dieses Produktes beträgt 62 °C.

### 4. Herstellung des kristallinen Urethanacrylates B1U

103,8 g des Polyesters B1 (OH-Zahl 31) werden aufgeschmolzen und bei 90 °C portionsweise unter kräftigen Rühren zu einer Mischung aus 16,1 g IPDI, 0,1 g IONOL CP und 0,1 g DBTL gegeben. Nach 30 min Reaktion werden zusätzlich 10,1 g Hydroxyethylacrylat zugetropft. Nach weiteren 30 min Rühren liegt der NCO-Gehalt unter 0,1 % und die heiße Reaktionsmischung wird aus dem Kolben auf eine Folie gegossen. Sobald die Reaktionsmasse erstarrt und abgekühlt ist, wird sie mechanisch zerkleinert und gemahlen. Der Schmelzpunkt dieses Produktes beträgt 80 °C.

### 5. Herstellung des kristallinen Urethanacrylates B2U

103,8 g des Polyesters B2 (OH-Zahl 31) werden aufgeschmolzen und bei 90 °C portionsweise unter kräftigen Rühren zu einer Mischung aus 16,1 g IPDI, 0,1 g IONOL CP und 0,1 g DBTL gegeben. Nach 30 min Reaktion werden zusätzlich 10,1 g Hydroxyethylacrylat zugetropft. Nach weiteren 30 min Rühren liegt der NCO-Gehalt unter 0,1 % und die heiße Reaktionsmischung wird aus dem Kolben auf eine Folie gegossen. Sobald die Reaktionsmasse erstarrt und abgekühlt ist, wird sie mechanisch zerkleinert und gemahlen. Der Schmelzpunkt dieses Produktes beträgt 109 °C.

### 6. Herstellung der erfindungsgemäßen Polymere und Pulverlackzusammensetzungen und der Vergleichsversuche

Die drei Bestandteile A1U, A2U und BU werden im entsprechenden Gewichtsverhältnis gemischt und 100 Teile dieser Mischung mit 0,5 Teilen BYK 361 (Verlaufmittel, BYK Chemie), 0,5 Teilen Benzoin (Entgasungsmittel, Aldrich) und 1 Teil EBECRYL 170 (Haftvermittler, UCB) versetzt. Die zerkleinerten Einsatzstoffe werden in einem Kollergang innig vermischt und anschließend im Extruder bis maximal 130 °C homogenisiert. Nach dem Erkalten wird das Extrudat gebrochen und mit einer Stiftsmühle im Falle der Vergleichsversuche mit und im Falle des erfindungsgemäßen Beispiels ohne Zusatz von Kühlmitteln (flüssiger Stickstoff oder Trockeneis) auf eine Komgröße < 100 µm gemahlen. Das so hergestellte Pulver wird mit einer elektrostatischen Pulverspritzanlage bei 60 KV auf entfettete, ggf. vorbehandelte Eisenbleche appliziert. Dann wird unter IR-Bestrahlung aufgeschmolzen und mit Hilfe von Elektronenstrahlen (15 MRad) ausgehärtet.

Für das Vergleichsbeispiel Z wurde die folgende Rezeptur eingesetzt:
300 g UVECOAT 2100 (UCB)
86 g UVECOAT 9010 (UCB)
8 g IRGACURE 184 (CIBA)
4 g RESIFLOW PV 5 (Worlée)
2 g WORLÉE Add 900 (Worlée)
Die Prüfwerte sind in der Tabelle 1 zusammengefaßt:

**Tabelle 1**

| | | | | | | | | | | | |
|---|---|---|---|---|---|---|---|---|---|---|---|
| *Versuch* | *A1U* | *A2U* | *B1U* | *B2U* | *Gesamt Tg [°C]* | *Mahlbar ohne K.*^{*1*} | *HK*^{*2*} *[sec]* | *ET*^{*3*} *[mm]* | *KS*^{*4*} *[in*lb*] | *LS*⁵ | *Trübung*^{*6*} *[%*] |
| 1 | 56 | 24 | 20 | - | 43 | Ja | 176 | > 10 | 80 | > 7d | 82 |
| 2 | 56 | 24 | - | 20 | 45 | Ja | 194 | > 10 | > 80 | > 7d | 12 |
| Vgl. X | | | 100 | 100 | - 80 | Nein | 70 | > 10 | > 80 | < 1d | - |
| Vgl. Y | 80 | | 20 | 20 | 32 | Nein | 135 | 10 | > 80 | 1d | - |
| Vgl. Z | | | | | | Nein | 88 | 6,4 | 50 | | - |

| | | | | | | | | | | | |
|---|---|---|---|---|---|---|---|---|---|---|---|
| 1: Mahlbarkeit ohne Einsatz von Kühlmittel | | | | | | | | | | | |
| 2: Härte nach König (DIN 53 157) | | | | | | | | | | | |
| 3: Erichsentiefung (DIN 53 156) | | | | | | | | | | | |
| 4: Kugelschlag direkt (DIN EN ISO 6272) | | | | | | | | | | | |
| 5: Lagerstabilität bei 35 °C (Prüfung auf Blockfestigkeit des Pulvers) | | | | | | | | | | | |
| 6: Transparenz bei einer Wellenlänge von 500 nm | | | | | | | | | | | |

Lediglich die erfindungsgemäßen Versuche 1 und 2 sind mahlbar ohne Zusatz von Kühlmittel und zeigen außerdem in der Beschichtung gleichzeitig hohe Härte, Flexibilität und Lagerstabilität. Alle nicht erfindungsgemäßen Vergleichsbeispiele (Vgl. X,Y und Z) weisen in mindestens einem dieser Punkte Nachteile auf. Zusätzlich können mit den erfindungsgemäßen Pulverlackzusammensetzungen 1 und 2 Beschichtungen mit stark unterschiedlichen Lichtdurchlässigkeiten hergestellt werden.

## Patentansprüche

1. Strahlen härtbare Pulverlackzusammensetzung
enthaltend
I. ein Bindemittel bestehend aus
A) 60 - 90 Gew.-% mindestens eines amorphen Urethanacrylats und
B) 10 - 40 Gew.-% mindestens eines kristallinen Urethanacrylats,
wobei der Tg der Mischung aus A und B mindestens 35 °C beträgt; und
II. Hilfs- und Zusatzstoffe,
wobei UV-Initiatoren in der Pulverlackzusammensetzung ausgeschlossen sind.

2. Strahlen härtbare Pulverlackzusammensetzung nach Anspruch 1,
**dadurch gekennzeichnet,**
**dass** das amorphe Urethanacrylat A durch Reaktion der folgenden Komponenten aufgebaut ist:
A1) mindestens ein amorpher hydroxylgruppenhaltiger Polyester mit einem Tg von 35-80°C,
A2) mindestens ein Polyisocyanat,
A3) mindestens eine Verbindung mit mindestens einer Alkoholgruppe und mindestens einer polymerisationsfähigen Acrylatgruppe.

3. Strahlen härtbare Pulverlackzusammensetzung nach Anspruch 2,
**dadurch gekennzeichnet,**
**dass** der Polyester A1 aufgebaut ist aus mindestens einer monomeren Dicarbonsäure, ausgewählt aus Isophthalsäure, Terephthalsäure, Hexahydroterephthalsäure und 1,4-Cyclohexandicarbonsäure
und
mindestens einem monomeren Polyol, ausgewählt aus Monoethylenglykol, Butandiol, Hexandiol, Neopentylglykol, Dicidol, Cyclohexandimethanol, Trimethylolpropan und Glycerin.

4. Strahlen härtbare Pulverlackzusammensetzung nach mindestens einem der Ansprüche 2 bis 3,
**dadurch gekennzeichnet,**
**dass** als Polyisocyanat A2 Isophorondiisocyanat, Hexamethylendiisocyanat, Trimethylhexamethylendiisocyanat, Dicyclohexylmethyldiisocyanat oder 2,2,6-Trimethyl-1,4-diisocyanatocyclohexan, Norbomandiisocyanat allein oder in Mischungen oder Folgeprodukte dieser Diisocyanate, wie Isocyanurate, Allophanate oder Biurete, eingesetzt werden.

5. Strahlen härtbare Pulverlackzusammensetzung nach mindestens einem der Ansprüche 2 bis 4,
**dadurch gekennzeichnet,**
**dass** als Komponente A3 Hydroxyethylacrylat eingesetzt wird.

6. Strahlen härtbare Pulverlackzusammensetzung nach mindestens einem der Ansprüche 1 bis 5,
**dadurch gekennzeichnet,**
**dass** das kristalline Urethanacrylat B durch Reaktion der folgenden Komponenten aufgebaut ist:
B1) mindestens ein kristalliner hydroxylgruppenhaltiger Polyester,
B2) mindestens ein Polyisocyanat,
B3) mindestens eine Verbindung mit mindestens einer Alkoholgruppe und mindestens einer polymerisationsfähigen Acrylatgruppe.

7. Strahlen härtbare Pulverlackzusammensetzung nach Anspruch 6,
**dadurch gekennzeichnet,**
**dass** der Polyester B1 aufgebaut ist aus mindestens einer monomeren Dicarbonsäure, ausgewählt aus Dodecandisäure, Adipinsäure, Bernsteinsäure, Sebacinsäure, Isophthalsäure, Terephthalsäure, Hexahydroterephthalsäure und 1,4-Cyclohexandicarbonsäure und mindestens einem monomeren Polyol, ausgewählt aus Monoethylenglykol, Butandiol, Hexandiol, Neopentylglykol, Cyclohexandimethanol, Glycerin und Trimethylolpropan.

8. Strahlen härtbare Pulverlackzusammensetzung nach mindestens einem der Ansprüche 6 bis 7,
**dadurch gekennzeichnet,**
**dass** als Polyisocyanat B2 Isophorondiisocyanat, Hexamethylendüsocyanat, Trimethylhexamethylendiisocyanat, Dicyclohexylmethyldiisocyanat oder 2,2,6-Trimethyl-1,4-diisocyanatocyclohexan, Norbornandiisocyanat allein oder in Mischungen oder Folgeprodukte dieser Diisocyanate, wie Isocyanurate, Allophanate oder Biurete, eingesetzt werden.

9. Strahlen härtbare Pulverlackzusammensetzung nach mindestens einem der Ansprüche 6 bis 8,
**dadurch gekennzeichnet,**
**dass** als Komponente B3 Hydroxyethylacrylat eingesetzt wird.

10. Strahlen härtbare Pulverlackzusammensetzung nach mindestens einem der Ansprüche 1 bis 9,
**dadurch gekennzeichnet,**
**dass** als Hilfs- und Zusatzstoffe, Verlaufmittel, Lichtstabilisatoren, Entgasungsmittel, Pigmente, Füllstoffe, Haftvermittler oder weitere acrylat- und/oder methacrylathaltige Verbindungen enthalten sind.

11. Verwendung von Zusammensetzungen
enthaltend
I. ein Bindemittel bestehend aus
A) 60 - 90 Gew.% mindestens eines amorphen Urethanacrylats und
B) 10 - 40 Gew.% mindestens eines kristallinen Urethanacrylats,
wobei der Tg der Mischung aus A und B mindestens 35 °C beträgt; und
II. Hilfs- und Zusatzstoffe, wobei UV-Initiatoren ausgeschlossen sind, zur Herstellung von Strahlen härtbaren Pulverlackzusammensetzungen.

12. Verwendung nach Anspruch 11,
**dadurch gekennzeichnet,**
**dass** das amorphe Urethanacrylat A durch Reaktion der folgenden Komponenten aufgebaut ist:
A1) mindestens ein amorpher hydroxylgruppenhaltiger Polyester mit einem Tg von 35 - 80 °C,
A2) mindestens ein Polyisocyanat,
A3) mindestens eine Verbindung mit mindestens einer Alkoholgruppe und mindestens einer polymerisationsfähigen Acrylatgruppe.

13. Verwendung nach Anspruch 12,
**dadurch gekennzeichnet,**
**dass** der Polyester A1 aufgebaut ist aus mindestens einer monomeren Dicarbonsäure, ausgewählt aus Isophthalsäure, Terephthalsäure, Hexahydroterephthalsäure und 1,4-Cyclohexandicarbonsäure
und
mindestens einem monomeren Polyol, ausgewählt aus Monoethylenglykol, Butandiol, Hexandiol, Neopentylglykol, Dicidol, Cyclohexandimethanol, Trimethylolpropan und Glycerin.

14. Verwendung nach mindestens einem der Ansprüche 12 bis 13,
**dadurch gekennzeichnet,**
**dass** als Polyisocyanat A2 Isophorondiisocyanat, Hexamethylendiisocyanat, Trimethylhexamethylendiisocyanat, Dicyclohexylmethyldiisocyanat oder 2,2,6-Trimethyl-1,4-diisocyanatocyclohexan, Norbomandiisocyanat allein oder in Mischungen oder Folgeprodukte dieser Diisocyanate, wie Isocyanurate, Allophanate oder Biurete, eingesetzt werden.

15. Verwendung nach mindestens einem der Ansprüche 12 bis 14,
**dadurch gekennzeichnet,**
**dass** als Komponente A3 Hydroxyethylacrylat eingesetzt wird.

16. Verwendung nach mindestens einem der Ansprüche 11 bis 15,
**dadurch gekennzeichnet,**
**dass** das kristalline Urethanacrylat B durch Reaktion der folgenden Komponenten aufgebaut ist:
B1) mindestens ein kristalliner hydroxylgruppenhaltiger Polyester,
B2) mindestens ein Polyisocyanat,
B3) mindestens eine Verbindung mit mindestens einer Alkoholgruppe und mindestens einer polymerisationsfähigen Acrylatgruppe.

17. Verwendung nach Anspruch 16,
**dadurch gekennzeichnet,**
**dass** der Polyester B1 aufgebaut ist aus mindestens einer monomeren Dicarbonsäure, ausgewählt aus Dodecandisäure, Adipinsäure, Bernsteinsäure, Sebacinsäure, Isophthalsäure, Terephthalsäure, Hexahydroterephthalsäure und 1,4-Cyclohexandicarbonsäure
und
mindestens einem monomeren Polyol, ausgewählt aus Monoethylenglykol, Butandiol, Hexandiol, Neopentylglykol, Cyclohexandimethanol, Glycerin und Trimethylolpropan.

18. Verwendung nach mindestens einem der Ansprüche 16 bis 17,
**dadurch gekennzeichnet,**
**dass** als Polyisocyanat B2 Isophorondiisocyanat, Hexamethylendiisocyanat, Trimethylhexamethylendiisocyanat, Dicyclohexylmethyldiisocyanat oder 2,2,6-Trimethyl-1,4-diisocyanatocyclohexan, Norbornandiisocyanat allein oder in Mischungen oder Folgeprodukte dieser Diisocyanate, wie Isocyanurate, Allophanate oder Biurete, eingesetzt werden.

19. Verwendung nach mindestens einem der Ansprüche 16 bis 18,
**dadurch gekennzeichnet,**
**dass** als Komponente B3 Hydroxyethylacrylat eingesetzt wird.

20. Verwendung nach mindestens einem der Ansprüche 11 bis 19,
**dadurch gekennzeichnet,**
**dass** als Hilfs- und Zusatzstoffe, Verlaufmittel, Lichtstabilisatoren, Entgasungsmittel, Pigmente, Füllstoffe, Haftvermittler oder weitere acrylat- und/oder methacrylathaltige Verbindungen enthalten sind.

21. Verwendung der Strahlen härtbaren Pulverlackzusammensetzungen nach mindestens einem der Ansprüche 11 bis 20 zur Herstellung von Beschichtungen mit hoher Transparenz.

22. Verwendung der Strahlen härtbaren Pulverlackzusammensetzungen nach mindestens einem der Ansprüche 11 bis 20 zur Herstellung von Beschichtungen mit niedriger Transparenz.

23. Verfahren zur Herstellung von Strahlen härtbaren Pulverlackzusammensetzungen
enthaltend
I. ein Bindemittel bestehend aus
A) 60 - 90 Gew.-% mindestens eines amorphen Urethanacrylats und
B) 10 - 40 Gew.-% mindestens eines kristallinen Urethanacrylats,
wobei der Tg der Mischung aus A und B mindestens 35 °C beträgt; und
II. Hilfs- und Zusatzstoffe,
wobei UV-Initiatoren in der Pulverlackzusammensetzung ausgeschlossen sind, bei Einhaltung einer Temperaturobergrenze zwischen 120 °C und 130 °C, in beheizbaren Knetern, insbesondere Extrudern.

24. Verfahren nach Anspruch 23,
**dadurch gekennzeichnet,**
**dass** als Einsatzstoffe Verbindungen nach mindestens einem der Ansprüche 2 bis 10 eingesetzt werden.

25. Verfahren zur Herstellung von Beschichtungen mit hoher oder niedriger Transparenz durch Verwendung von Strahlen härtbaren Pulverlackzusammensetzungen
enthaltend
I. ein Bindemittel bestehend aus
A) 60 - 90 Gew.% mindestens eines amorphen Urethanacrylats und
B) 10 - 40 Gew.% mindestens eines kristallinen Urethanacrylats,
wobei der Tg der Mischung aus A und B mindestens 35 °C beträgt; und
II. Hilfs- und Zusatzstoffe,
wobei UV-Initiatoren in der Pulverlackzusammensetzung ausgeschlossen sind.

26. Verfahren nach Anspruch 25,
**dadurch gekennzeichnet,**
**dass** als Ausgangskomponenten die Verbindungen nach mindestens einem der Ansprüche 2 bis 10 verwendet werden.

## Claims

1. A radiation curable powder coating composition comprising
I. a binder composed of
A) 60-90% by weight of at least one amorphous urethane acrylate and
B) 10-40% by weight of at least one crystalline urethane acrylate, the Tg of the mixture of A and B being at least 35°C; and
II. auxiliaries and additives,
UV initiators being excluded in the powder coating composition.

2. A radiation curable powder coating composition according to claim 1, **characterized in that** the amorphous urethane acrylate A is synthesized by reacting the following components:
A1) at least one amorphous hydroxyl-containing polyester having a Tg of 35-80°C,
A2) at least one polyisocyanate,
A3) at least one compound containing at least one alcohol group and at least one polymerizable acrylate group.

3. A radiation curable powder coating composition according to claim 2, **characterized in that** the polyester A1 is synthesized from at least one monomeric dicarboxylic acid selected from isophthalic acid, terephthalic acid, hexahydroterephthalic acid, and 1,4-cyclohexanedicarboxylic acid
and
at least one monomeric polyol selected from monoethylene glycol, butanediol, hexanediol, neopentyl glycol, dicidol, cyclohexanedimethanol, trimethylolpropane, and glycerol.

4. A radiation curable powder coating composition according to at least one of claims 2 and 3, **characterized in that** isophorone diisocyanate, hexamethylene diisocyanate, trimethylhexamethylene diisocyanate, dicyclohexylmethyl diisocyanate or 2,2,6-trimethyl-1,4-diisocyanatocyclohexane, norbornane diisocyanate, alone or in mixtures, or derivatives of these diisocyanates, such as isocyanurates, allophanates or biurets, is or are used as polyisocyanate A2.

5. A radiation curable powder coating composition according to at least one of claims 2 to 4, **characterized in that** hydroxyethyl acrylate is used as component A3.

6. A radiation curable powder coating composition according to at least one of claims 1 to 5, **characterized in that** the crystalline urethane acrylate B is synthesized by reacting the following components:
B1) at least one crystalline hydroxyl-containing polyester,
B2) at least one polyisocyanate,
B3) at least one compound containing at least one alcohol group and at least one polymerizable acrylate group.

7. A radiation curable powder coating composition according to claim 6, **characterized in that** the polyester B1 is synthesized from at least one monomeric dicarboxylic acid selected from dodecanedioic acid, adipic acid, succinic acid, sebacic acid, isophthalic acid, terephthalic acid, hexahydroterephthalic acid and 1,4-cyclohexanedicarboxylic acid
and
at least one monomeric polyol selected from monoethylene glycol, butanediol, hexanediol, neopentyl glycol, cyclohexanedimethanol, glycerol and trimethylolpropane.

8. A radiation curable powder coating composition according to at least one of claims 6 and 7, **characterized in that** isophorone diisocyanate, hexamethylene diisocyanate, trimethylhexamethylene diisocyanate, dicyclohexylmethyl diisocyanate or 2,2,6-trimethyl-1,4-diisocyanatocyclohexane, norbornane diisocyanate, alone or in mixtures, or derivatives of these diisocyanates, such as isocyanurates, allophanates or biuretes, is or are used as polyisocyanate B2.

9. A radiation curable powder coating composition according to at least one of claims 6 to 8, **characterized in that** hydroxyethyl acrylate is used as component B3.

10. A radiation curable powder coating composition according to at least one of claims 1 to 9, **characterized in that** levelling agents, light stabilizers, devolatilizers, pigments, fillers, adhesion promoters or further acrylate-containing and/or methacrylate-containing compounds are present as auxiliaries and additives.

11. The use of a composition comprising
I. a binder composed of
A) 60-90% by weight of at least one amorphous urethane acrylate and
B) 10-40% by weight of at least one crystalline urethane acrylate, the Tg of the mixture of A and B being at least 35°C; and
II. auxiliaries and additives, UV initiators being excluded, for producing a radiation curable powder coating composition.

12. The use according to claim 11, **characterized in that** the amorphous urethane acrylate A is synthesized by reacting the following components:
A1) at least one amorphous hydroxyl-containing polyester having a Tg of 35-80°C,
A2) at least one polyisocyanate,
A3) at least one compound containing at least one alcohol group and at least one polymerizable acrylate group.

13. The use according to claim 12, **characterized in that** the polyester A1 is synthesized from at least one monomeric dicarboxylic acid selected from isophthalic acid, terephthalic acid, hexahydroterephthalic acid, and 1,4-cyclohexanedicarboxylic acid
and
at least one monomeric polyol selected from monoethylene glycol, butanediol, hexanediol, neopentyl glycol, dicidol, cyclohexanedimethanol, trimethylolpropane, and glycerol.

14. The use according to at least one of claims 12 and 13, **characterized in that** isophorone diisocyanate, hexamethylene diisocyanate, trimethylhexamethylene diisocyanate, dicyclohexylmethyl diisocyanate or 2,2,6-trimethyl-1,4-diisocyanatocyclohexane, norbornane diisocyanate, alone or in mixtures, or a derivative of these diisocyanates, such as an isocyanurate, allophanate or biuret, is used as polyisocyanate A2.

15. The use according to at least one of claims 12 to 14, **characterized in that** hydroxyethyl acrylate is used as component A3.

16. The use according to at least one of claims 11 to 15, **characterized in that** the crystalline urethane acrylate B is synthesized by reacting the following components:
B1) at least one crystalline hydroxyl-containing polyester,
B2) at least one polyisocyanate,
B3) at least one compound containing at least one alcohol group and at least one polymerizable acrylate group.

17. The use according to claim 16, **characterized in that** the polyester B1 is synthesized from at least one monomeric dicarboxylic acid selected from dodecanedioic acid, adipic acid, succinic acid, sebacic acid, isophthalic acid, terephthalic acid, hexahydroterephthalic acid and 1,4-cyclohexanedicarboxylic acid
and
at least one monomeric polyol selected from monoethylene glycol, butanediol, hexanediol, neopentyl glycol, cyclohexanedimethanol, glycerol and trimethylolpropane.

18. The use according to at least one of claims 16 to 17, **characterized in that** isophorone diisocyanate, hexamethylene diisocyanate, trimethylhexamethylene diisocyanate, dicyclohexylmethyl diisocyanate or 2,2,6-trimethyl-1,4-diisocyanatocyclohexane, norbornane diisocyanate, alone or in mixtures, or derivatives of these diisocyanates, such as isocyanurates, allophanates or biuretes, is or are used as polyisocyanate B2.

19. The use according to at least one of claims 16 to 18, **characterized in that** hydroxyethyl acrylate is used as component B3.

20. The use according to at least one of claims 11 to 19, **characterized in that** levelling agents, light stabilizers, devolatilizers, pigments, fillers, adhesion promoters or further acrylate-containing and/or methacrylate-containing compounds are present as auxiliaries and additives.

21. The use of a radiation curable powder coating composition according to at least one of claims 11 to 20 for producing coatings of high transparency.

22. The use of a radiation curable powder coating composition according to at least one of claims 11 to 20 for producing coatings of low transparency.

23. A process for producing a radiation curable powder coating composition comprising
I. a binder composed of
A) 60-90% by weight of at least one amorphous urethane acrylate and
B) 10-40% by weight of at least one crystalline urethane acrylate, the Tg of the mixture of A and B being at least 35°C, and
II. auxiliaries and additives,
UV initiators being excluded in the powder coating composition, observing an upper temperature limit of between 120°C and 130°C, in a heatable kneading device, particularly an extruder.

24. A process according to claim 23, **characterized in that** compounds according to at least one of claims 2 to 10 are used as ingredients.

25. A process for producing coatings of high or low transparency by using a radiation curable powder coating composition comprising
I. a binder composed of
A) 60-90% by weight of at least one amorphous urethane acrylate and
B) 10-40% by weight of at least one crystalline urethane acrylate, the Tg of the mixture of A and B being at least 35°C; and
II. auxiliaries and additives, UV initiators being excluded in the powder coating composition.

26. A process according to claim 25, **characterized in that** compounds as defined in at least one of claims 2 to 10 are used as starting components.

## Revendications

1. Composition de laque en poudre durcissable par rayonnement, comprenant :
I. un agent liant composé de
A) 60 à 90 % en poids d'au moins un acrylate d'uréthane amorphe et
B) 10 à 40 % en poids d'un acrylate d'uréthane cristallin, la température de transition vitreuse du mélange de A et B s'élevant au moins à 35°C, et
II. des substances auxiliaires et additifs, à l'exclusion des amorceurs -UV dans la composition de laque en poudre étant exclus.

2. Composition de laque en poudre durcissable selon la revendication 1,
**caractérisée en ce que**
l'acrylate d'uréthane amorphe A est constitué par la réaction des composants suivants :
A1) au moins un polyester amorphe contenant des groupes hydroxyle avec une température de transition vitreuse de 35 à 80°C,
A2) au moins un polyisocyanate,
A3) au moins un composé comprenant au moins un groupe d'alcools et au moins un groupe d'acrylates capables de polymériser.

3. Composition de laque en poudre durcissable selon la revendication 2,
**caractérisée en ce que**
le polyester A1 est constitué d'au moins un acide dicarbonique monomère choisi parmi l'acide isophtalique, l'acide téréphtalique, l'acide hexa-hydro-téréphtalique et l'acide 1,4-cyclohexanedicarbonique, et d'au moins un polyol monomère choisi parmi le monoéthylène-glycol, le butanediol, l'hexanediol, le néophentyl-glycol, le dicidol, le cyclohexanediméthanol, le triméthylolpropane, la glycérine.

4. Composition de laque en poudre durcissable selon au moins l'une des revendications 2 à 3,
**caractérisée en ce que**
comme polyisocyanate A2, on utilise le diisocyanate d'isophorone, le diisocyanate d'hexaméthylène, le diisocyanate de triméthylhexaméthylène, le diisocyanate de dicyclohexylméthyl ou le 2,2,6-triméthyl-1,4-diisocyanatocyclohexane, le diisocyanate norbornène seul ou en combinaisons ou les produits issus de ces diisocyanates, comme les isocyanurates, les allophanates ou les biurets.

5. Composition de laque en poudre durcissable selon au moins l'une des revendications 2 à 4,
**caractérisée en ce que**
l'hydroxyéthylacrylate est utilisé comme composant A3.

6. Composition de laque en poudre durcissable selon au moins l'une des revendications 1 à 5,
**caractérisée en ce que**
l'acrylate d'uréthane cristallin B est constitué par la réaction des composants suivants :
B1) au moins un polyester cristallin contenant des groupes hydroxyle,
B2) au moins un polyisocyanate,
B3) au moins un composé comprenant au moins un groupe d'alcool et au moins un groupe d'acrylates capable de polymériser.

7. Composition de laque en poudre durcissable selon la revendication 6,
**caractérisée en ce que**
le polyester B1 est constitué d'au moins un acide dicarbonique monomère, choisi parmi l'acide dodécanedioïque, l'acide adipique, l'acide succinique, l'acide sébacique, l'acide isophtalique, l'acide téréphtalique, l'acide hexahydrotéréphtalique et l'acide 1,4-cyclohexanedicarbonique, et
d'au moins d'un polyol monomère, choisi parmi le monoéthylène-glycol, le butanediol, l'hexanediol, le néopentyl-glycol, le cyclohexanediméthariol, la glycérine et le triméthylolpropane.

8. Composition de laque en poudre durcissable selon au moins l'une des revendications 6 à 7,
**caractérisée en ce que**
comme polyisocyanate B2, on utilise le diisocyanate d'isophorone, le diisocyanate d'hexaméthylène, le diisocyanate de triméthylhexaméthylène, le diisocyanate de dicyclohexylméthyl ou le 2,2,6-triméthyl-1,4-diisocyanatocyclohéxane, le diisocyanate norbornène seul ou en combinaisons ou les produits issus de ces diisocyanates, comme les isocyanates, les allophanates ou les biurets.

9. Composition de laque en poudre durcissable selon au moins l'une des revendications 6 à 8,
**caractérisée en ce que**
l'hydroxyéthylacrylate est utilisé comme composant B3.

10. Composition de laque en poudre durcissable selon au moins l'une des revendications 1 à 9,
**caractérisée en ce que**
comme substances auxiliaires et additifs, elle contient des produits nivelants, des stabilisateurs de lumière, des agents de dégazage, des pigments, des charges, des agents de pontage ou d'autres composés contenant des acrylates et/ou des méthacrylates.

11. Utilisation de compositions comprenant :
comprenant
I. un agent liant composé de
A) 60 à 90 % en poids au moins d'un acrylate d'uréthane amorphe et
B) 10 à 40 % en poids d'au moins un acrylate d'uréthane cristallin,
la température de transition vitreuse du mélange de A et B s'élevant au moins à 35°C, et
II. des substances auxiliaires et additifs, à l'exclusion des amorceurs --UV pour la fabrication de compositions de laque en poudre durcissable par rayonnement.

12. Utilisation selon la revendication 11,
**caractérisée en ce que**
l'acrylate d'uréthane amorphe A est constitué par la réaction des composants suivants :
A1) au moins un polyester amorphe contenant des groupes hydroxyle avec une température de transition vitreuse de 35 à 80°C,
A2) au moins un polyisocyanate,
A3) au moins un composé comprenant au moins un groupe d'alcools et au moins un groupe d'acrylates capables de polymériser.

13. Utilisation selon la revendication 12,
**caractérisée en ce que**
le polyester A1 est constitué d'au moins un acide dicarbonique monomère choisi parmi l'acide isophtalique, l'acide téréphtalique, l'acide hexa-hydro-téréphtalique et l'acide 1,4-cyclohexanedicarbonique, et
d'au moins un polyol monomère choisi parmi le monoéthylène-glycol, le butanediol, l'hexanediol, le néophentyl-glycol, le dicidol, le cyclohexanediméthanol, le triméthylolpropane, la glycérine.

14. Utilisation selon au moins l'une des revendications 12 à 13,
**caractérisée en ce que**
comme polyisocyanate A2, on utilise le diisocyanate d'isophorone, le diisocyanate d'hexaméthylène, le diisocyanate de triméthylhexaméthylène, le diisocyanate de dicyclohexylméthyl ou en combinaisons ou les produits issus de ces diisocyanates, comme les isocyanurates, les allophanates ou les biurets.

15. Utilisation selon au moins l'une des revendications 12 à 14,
**caractérisée en ce que**
l'hydroxyéthylacrylate est utilisé comme composant A3.

16. Utilisation selon au moins l'une des revendications 11 à 15,
**caractérisée en ce que**
l'acrylate d'uréthane cristallin B est constitué par la réaction des composants suivants :
B1) au moins un polyester cristallin contenant des groupes hydroxyle,
B2) au moins un polyisocyanate,
B3) au moins un composé comprenant au moins un groupe d'alcool et au moins un groupe d'acrylates capable de polymériser.

17. Utilisation selon la revendication 16,
**caractérisée en ce que**
le polyester B1 est constitué d'au moins un acide dicarbonique monomère, choisi parmi l'acide dodécanedioïque, l'acide adipique, l'acide succinique, l'acide sébacique, l'acide isophtalique, l'acide téréphtalique, l'acide hexahydrotéréphtalique et l'acide 1,4-cyclohexanedicarbonique, et
d'au moins d'un polyol monomère, choisi parmi le monoéthylène-glycol, le butanediol, l'hexanediol, le néopentyl-glycol, le cyclohexanediméthanol, la glycérine et le triméthylolpropane.

18. Utilisation selon au moins l'une des revendications 16 à 17,
**caractérisée en ce que**
comme polyisocyanate B2, on utilise le diisocyanate d'isophorone, le diisocyanate d'hexaméthylène, le diisocyanate de triméthylhexaméthyléne, le diisocyanate de dicyclohexylméthyl ou le 2,2,6-triméthyl-1,4-diisocyanatocyclohéxane, le diisocyanate norbornène seul ou en combinaisons ou les produits issus de ces diisocyanates, comme les isocyanates, les allophanates ou les biurets.

19. Utilisation selon au moins l'une des revendications 16 à 18,
**caractérisée en ce que**
l'hydroxyéthylacrylate est utilisé comme composant B3.

20. Utilisation selon au moins l'une des revendications 11 à 19,
**caractérisée en ce que**
comme substances auxiliaires et additifs, elle comprend des produits nivelants, des stabilisateurs de lumière, des agents de dégazage, des pigments, des charges, des agents de pontage ou d'autres composés contenant des acrylates et/ou des méthacrylates.

21. Utilisation des compositions de laque en poudre durcissable par rayonnement selon au moins l'une des revendications 11 à 20, pour la fabrication de revêtements d'une grande transparence.

22. Utilisation des compositions de laque en poudre durcissable par rayonnement selon au moins l'une des revendications 11 à 20, pour la fabrication de revêtements d'une faible transparence.

23. Procédé de fabrication de compositions de laque en poudre durcissable par rayonnement comprenant :
I. un agent liant composé de
A) 60 à 90 % en poids d'au moins un acrylate d'uréthane amorphe et
B) 10 à 40 % en poids d'un acrylate d'uréthane cristallin,
la température de transition vitreuse du mélange de A et B s'élevant au moins à 35°C, et
II. des substances auxiliaires et additifs,
à l'exclusion des promoteurs -UV dans la composition de laque en poudre, en respectant un seuil limite supérieur de la température entre 120°C et 130°C dans des pétrins mécaniques pouvant être chauffés, notamment dans des extrudeuses.

24. Procédé selon la revendication 23,
**caractérisé en ce que**
comme matières d'emploi, on utilise des compositions selon au moins l'une des revendications 2 à 10.

25. Procédé de fabrication de revêtements d'une grande ou d'une faible transparence moyennant l'utilisation de compositions de laque en poudre durcissable par rayonnement, comprenant :
I. un agent liant composé de
A) 60 à 90 % en poids d'au moins un acrylate d'uréthane amorphe et
B) 10 à 40 % en poids d'un acrylate d'uréthane cristallin, la température de transition vitreuse du mélange de A et B s'élevant au moins à 35°C, et
II. des substances auxiliaires et additifs,
à l'exclusion des amorceurs -UV dans la composition de laque en poudre.

26. Procédé selon la revendication 25,
**caractérisé en ce que**
comme composants de base, on utilise des compositions selon au moins l'une des revendications 2 à 10.
